# EUROPÄISCHE PATENTSCHRIFT

(11) **EP 0 450 109 B1**
(45) Veröffentlichungstag und Bekanntmachung des Hinweises auf die Patenterteilung: **25.05.1994**
(21) Anmeldenummer: 90106223.2
(22) Anmeldetag: 31.03.1990
(51) Int. Cl.: B01D 17/032, B01D 21/24

(54) **Flüssigkeitsbehälter mit einem Ablaufkanal**
Liquid reservoir with a drain
Réservoir pour liquide avec une rigole

(43) Veröffentlichungstag der Anmeldung: 09.10.1991
(73) Patentinhaber: Rompf Klärwerkeinrichtungen GmbH & Co., D-35757 Driedorf (DE)
(72) Erfinder: Hägerich, Bodo Dipl.-Ing., D-6349 Driedorf (DE); Diehl, Klaus, D-6340 Dillenburg 4 (DE)
(74) Vertreter: Missling, Arne, Dipl.-Ing.

(56) Entgegenhaltungen:
- EP-A- 0 331 807
- DE-A- 3 627 119
- DE-A- 3 642 702
- GB-A- 2 129 697
- US-A- 2 348 938

## Beschreibung

Die Erfindung bezieht sich auf eine Vorrichtung zur Entnahme von Flüssigkeiten und von Schwimmstoffen von einer Flüssigkeitsoberfläche mit einem Ablaufkanal, einem den Ablaufkanal von der Flüssigkeitsoberfläche abtrennenden höhenveränderbaren Wehr und einem mit dem Wehr betriebsverbundenen Schwimmer.

Vorrichtungen der eingangs genannten Art werden insbesondere bei Klärbecken verwendet, aus welchem exakt zu steuernde Flüssigkeitsmengen abgeführt werden sollen. Dabei ist es insbesondere bei dieser Verwendung erforderlich, Schwimmstoffe, welche sich an der Oberfläche der Flüssigkeit befinden, abzuleiten.

Es sind aus dem Stand der Technik Einrichtungen bekannt, bei welchen das höhenveränderbare Wehr in Form einer Überfallkante ausgebildet ist, die von einer Räumerbrücke aus in ihrer Höhe eingestellt wird, beispielsweise unter Verwendung einer Spindel. Dabei erweist es sich als nachteilig, daß bei Schwankungen der Füllhöhe der Flüssigkeit in dem Behälter die Überfallkante entweder von Hand oder mittels aufwendiger elektronischer Einrichtungen nachgestellt werden muß. Erfolgt dies nicht, so werden entweder zu große oder keine Flüssigkeitsmengen abgeführt, was zum einen zu einem zu großen Flüssigkeitsverlust und zum anderen dazu führt, daß die an der Oberfläche schwimmenden Stoffe nicht abgeführt werden können. Ein weiterer Nachteil dieser bekannten Ausgestaltungsform liegt darin, daß Ungenauigkeiten des Bauwerks, insbesondere der Oberkanten bei fahrbaren Räumerbrücken, eine exakte Einstellung der abzuführenden Flüssigkeitsmenge verhindern.

Bei einem weiteren bekannten Ausführungsbeispiel (DE-OS 34 43 309) ist an der Überfallkante selbst ein Schwimmer angebracht, welcher die Überlaufkante, bedingt durch seinen Auftrieb nach oben bewegt und somit schließt. Bei einem Anstieg des Flüssigkeitsstandes in dem Ablaufkanal können jedoch Betriebszustände auftreten, in welchen der Schwimmer die Überfallkante bzw. das Wehr öffnet, anstatt diese zu schließen, so daß eine gezielte Steuerung der abgeführten Flüssigkeitsmenge nicht möglich ist.

Deshalb wurde entsprechend EP-Patentanmeldung 0 331 807 A1 stattdessen vorgeschlagen, den Füllstand des Ablaufkanals als Regelgröße für einen Schwimmer zu verwenden. Damit hat man aber die angestrebte Regelung des Flüssigkeitsniveaus im Klärbecken selbst verlassen.

Der Erfindung liegt die Aufgabe zugrunde, eine Vorrichtung der eingangs genannten Art zu schaffen, welche einfach und betriebssicher aufgebaut ist und bei welcher eine zuverlässige, einstellbare Abführung von Flüssigkeit ermöglicht wird.

Erfindungsgemäß wird die Aufgabe dadurch gelöst, daß der Innenraum des Schwimmers mittels einer kommunizierenden Röhre mit dem Ablaufkanal verbunden ist, daß das Wehr in Form einer mittels eines Gelenks schwenkbaren Wandung des Ablaufkanals ausgebildet ist und daß die schwenkbare Wandung über einen Lagerarm starr mit dem Schwimmer verbunden ist. Das Gelenk kann beispielsweise in Form einer flüssigkeitsdichten, elastischen Verbindungslage ausgestaltet sein. Durch die Ausbildung einer Wandung des Ablaufkanals als Wehr ist es möglich, auf zusätzliche Dichteinrichtungen zu verzichten und das höhenveränderbare Wehr so auszugestalten, daß ein Höchstmaß an Betriebssicherheit gewährleistet ist. Insbesondere wird bei dieser Ausgestaltungsform verhindert, daß in der Flüssigkeit befindliche Schwimmstoffe zu einem Verklemmen oder Blockieren des Wehrs führen, da dieses lediglich verschwenkt werden muß.

Um ein gleichmäßiges, ungestörtes Abfließen der Flüssigkeit in den Ablaufkanal sicherzustellen und um insbesondere bei der Ableitung von Schwimmstoffen, welche sich auf der Flüssigkeit befinden, eine gleichmäßige, laminare Strömung zu gewährleisten, kann es sich als günstig erweisen, wenn die schwenkbare Wandung des Ablaufkanals eine Überfallkante aufweist. Dabei kann es sich als besonders günstig erweisen, wenn der Schwimmer höhenverstellbar an dem Lagerarm gelagert ist. Durch die Verstellmöglichkeit des Schwimmers ist es möglich, die jeweils abzuführende Flüssigkeitsmenge einzustellen und für das nachfolgende Verfahren festzulegen.

Falls es wünschenswert ist, ein vollständiges Schließen des höhenveränderbaren Wertes zu verhindern, kann erfindungsgemäß vorgesehen sein, daß im Ablaufbereich des Ablaufkanals ein Überlaufwehr angeordnet ist. Mittels dieses Überlaufwehrs wird stets ein vorgegebener Flüssigkeitsstand in dem Ablaufkanal aufrechterhalten, welcher, bedingt durch die über die kommunizierende Röhre in den Schwimmer eintretende Flüssigkeit den Auftrieb des Schwimmers vermindert und somit dazu führt, daß stets eine gleichbleibende Flüssigkeitsmenge abgeführt wird.

Weiterhin ist es erfindungsgemäß möglich, den Ablaufkanal entweder mittels einer Pumpe zu entleeren oder mit einem Gefälle zu versehen, um ein Abfließen der Flüssigkeit sicherzustellen.

Die erfindungsgemäße Vorrichtung zeichnet sich durch eine Reihe erheblicher Vorteile aus. Da der Innenraum des Schwimmers in Flüssigkeitsverbindung mit dem Innenraum des Ablaufkanals steht, ist es möglich, über die Menge der in dem Ablaufkanal befindlichen Flüssigkeit die Stellung des Schwimmers und damit des höhenveränderbaren Wehrs zu steuern. So ist es beispielsweise möglich, die Betriebsverbindung zwischen dem Schwimmer und dem höhenveränderbaren Wehr so auszubilden, daß bei Überschreiten einer bestimmten Flüssigkeitsmenge oder eines bestimmten Flüssigkeitsspiegels in dem Ablaufkanal der Schwimmer, bedingt durch die über die kommunizierende Röhre in ihn eintretenden Flüssigkeit sein Auftriebsverhalten ändert und das höhenveränderbare Wehr anhebt und damit schließt. Erfindungsgemäß ist es somit möglich, durch eine Einjustierung der Lage des Schwimmers die jeweils in dem Ablaufkanal abzuführende Flüssigkeitsmenge einzustellen. Da die Regelung in direkter Abhängigkeit von der über die kommunizierende Röhre in den Schwimmer eingeleiteten Flüssigkeitsmenge erfolgt, erübrigen sich zusätzliche Steuerungs- oder Regelungseinrichtungen, insbesondere elektronische Einrichtungen. Dies führt zu einem weiteren wesentlichen Vorteil des erfindungsgemäßen Flüssigkeitsbehälters. Dieser kann nämlich auch dort eingesetzt werden, wo aufwendige Regelungseinrichtungen, sei es aus Gründen einer fehlenden Stromversorgung oder aus Gründen der Umgebungsbedingungen nicht einsetzbar sind.

Aus der GB-Patentanmeldung 21 29 697 A ist es zwar bereits bekannt, eine Abzugsvorrichtung durch einen Schwimmer so zu steuern, daß ihre Einmündung stets in Höhe des Flüssigkeitsspiegels verbleibt, wobei die Abzugsvorrichtung mit einem schwimmerverbundenen Tank kommuniziert. Ein Ablaufkanal ist bei dieser Anordnung nicht in die Regelstrecke einbezogen, so daß der Ablauf durch eine Pumpe besorgt werden muß, was die Vorrichtung erheblich verteuert.

In einer besonders günstigen Weiterbildung der Erfindung ist vorgesehen, daß die Röhre an ihrem einen Ende im Bodenbereich des Ablaufkanals mündet. Bei dieser Ausgestaltungsform ist es bei einer Entleerung des Ablaufkanals jeweils möglich, auch den Schwimmer vollständig zu entleeren.

In einer anderen, ebenfalls vorteilhaften Ausgestaltungsform der Erfindung kann vorgesehen sein, daß die Röhre in einem Abstand zum Boden des Ablaufkanals mündet. In dem Ablaufkanal wird somit stets ein vorgegebener Flüssigkeitsstand aufrechterhalten, so daß es möglich ist, eine voreinstellbare Flüssigkeitsmenge abzuführen. Der Schwimmer wird erst bei Überschreiten dieser Flüssigkeitsmenge, d.h. bei einem höheren Flüssigkeitsstand in dem Ablaufkanal voll Flüssigkeit laufen und ein Schließen des Wehrs bewirken.

Bevorzugterweise ist die Röhre in Form eines flexiblen Schlauchs ausgebildet, welcher beispielsweise im Bodenbereich des hohlen Schwimmerkörpers münden kann. Bei dieser Ausgestaltungsform ergeben sich keine Beeinträchtigungen der Bewegbarkeit des Schwimmers durch die kommunizierende Röhre.

Im folgenden wird die Erfindung anhand eines Ausführungsbeispiels in Verbindung mit der Zeichnung beschrieben. Dabei zeigt:
- Fig. 1: eine schematische Seitenansicht, teils im Schnitt, des mit dem Ablaufkanal versehenen Bereichs eines Flüssigkeitsbehälters;
- Fig. 2: eine Draufsicht auf die in Fig. 1 gezeigte Anordnung; und
- Fig. 3: eine Seitenansicht auf die rechte Seite der in Fig. 1 gezeigten Anordnung.

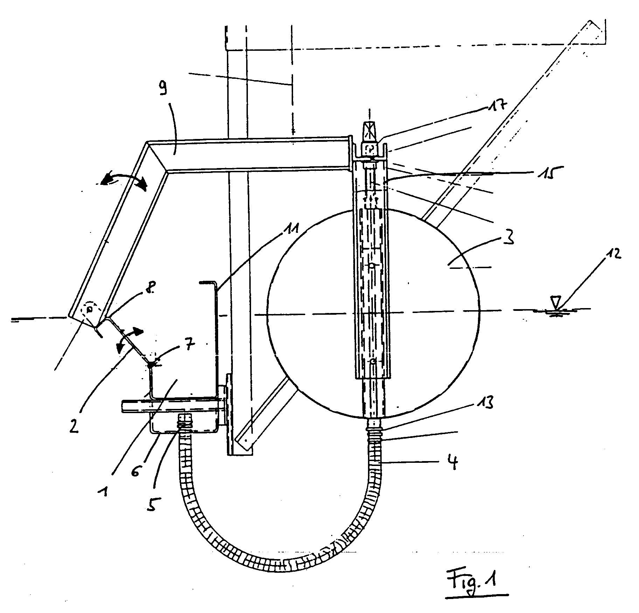

In Fig. 1 ist in schematischer Weise eine Seitenansicht des Bereichs einer erfindungsgemäßen Vorrichtung in einem Flüssigkeitsbehälter dargestellt, welche mit einem Ablaufkanal 1 versehen ist. Der Ablaufkanal 1 ist in Fig. 1 im Schnitt dargestellt, auf Darstellung der Wandungen des Flüssigkeitsbehälters wurde aus Gründen der Verdeutlichung der vorliegenden Erfindung verzichtet.

Der Ablaufkanal 1 weist einen Boden 6 sowie eine fest mit diesem verbundene Rückwand 11 auf. Die der Rückwand 11 gegenüberliegende Wandung des Ablaufkanals 1 ist in ihrem mittleren Bereich mit einem Gelenk oder Scharnier versehen, welches flüssigkeitsdicht ausgebildet ist und eine schwenkbare Wandung 2 des Ablaufkanals 1 lagert.

Der Ablaufkanal 1 ist über den größten Teil seiner Höhe so angeordnet, daß er sich unterhalb des Flüssigkeitsstandes 12 der in dem Flüssigkeitsbehälter befindlichen Flüssigkeit befindet.

Im Bereich des Bodens 6 des Ablaufkanals 1 ist eine in Form eines Schlauches ausgebildete kommunizierende Röhre 4 angeordnet, welche mit ihrem Ende 5 in den Innenraum des Ablaufkanals 1 mündet.

Das andere Ende 13 des Schlauchs 4 mündet in den Innenraum eines Schwimmers 3, welcher auf der schwenkbaren Wandung 2 abgewandten Seite des Ablaufkanals 1 angeordnet ist.

Der Schwimmer 3 ist über einen Lagerarm 9 starr mit der schwenkbaren Wandung 2 verbunden, so daß eine Vertikalbewegung des Schwimmers 3 zu einer Verschwenkung des Wehrs bzw. der schwenkbaren Wandung 2 führt.

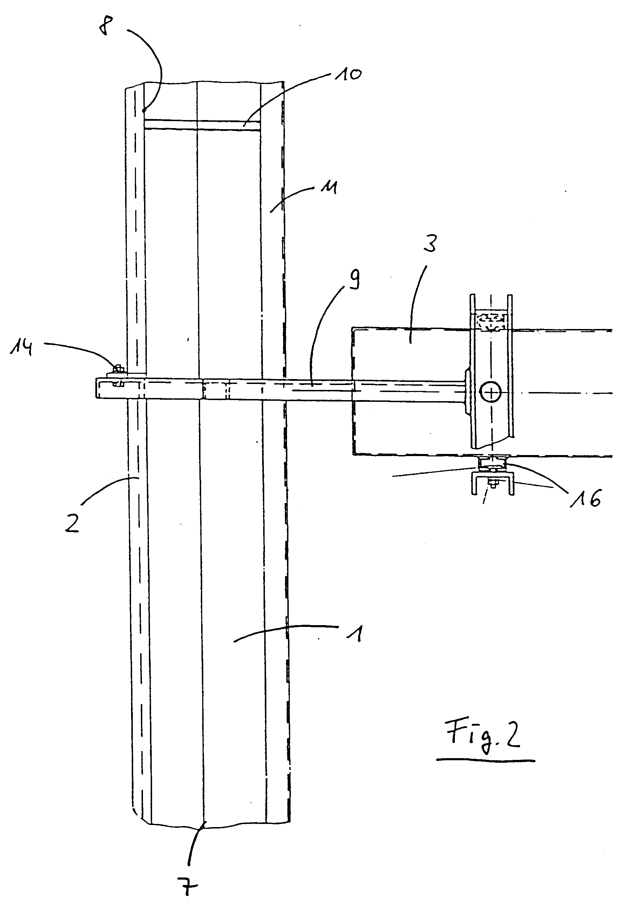

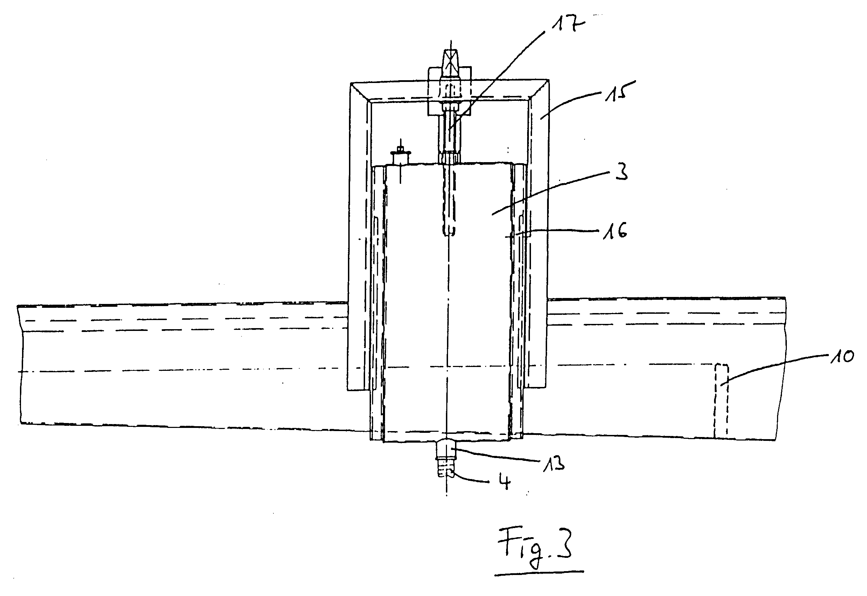

In Fig. 2 ist eine Draufsicht auf die in Fig. 1 dargestellte Anordnung gezeigt. Dabei ist insbesondere zu erkennen, daß, wie auch in Fig. 1 dargestellt, die schwenkbare Wandung 2 des Ablaufkanals 1 mit einer Überfallkante 8 versehen ist, welche eine gleichmäßige, bevorzugterweise laminare Strömung in den Ablaufkanal 1 gewährleistet.

Die Verbindung zwischen dem Lagerarm 9 und der schwenkbaren Wandung 2 des Ablaufkanals 1 kann, wie in Fig. 2 dargestellt, mittels einer Schraubverbindung 14 erfolgen, um eine Einstellbarkeit bei der Montage des Flüssigkeitsbehälters zu ermöglichen.

Der Schwimmer 3 kann beliebige Formen annehmen, es ist jedoch aus Gründen der vereinfachten Herstellung günstig, diesen zylindrisch oder quaderförmig auszubilden.

Bei dem gezeigten Ausführungsbeispiel ist das dem Schwimmer 3 zugewandte Ende des Lagerarms 9 mit einem U-förmigen Rahmen 15 verbunden (siehe Fig. 3), in welchem der Schwimmer 3 höhenveränderbar geführt ist, beispielsweise mittels im einzelnen nicht dargestellter seitlicher Schienenelemente 16. Der obere Bereich des Rahmens 15 weist eine drehbar an des Rahmen 15 gelagerte Einstellspindel 17 auf, welche in eine Gewindeausnehmung des Schwimmers 3 eingeführt ist. Durch eine Verdrehung der Gewindespindel 17 ist es möglich, die Höheneinstellung des Schwimmers 3 relativ zu dem Rahmen 15 und damit dem Lagerarm 9 einzustellen.

Wie in Fig. 3 dargestellt, weist der Ablaufkanal 1 ein Gefälle auf, so daß die in ihn eintretende Flüssigkeit abgeleitet wird.

In den Fig. 2 und 3 ist weiterhin ein Überlaufwehr 10 dargestellt, welches in dem Innenraum des Ablaufkanals 1 eingesetztsein kann. Durch das Überlaufwehr 10, welches entfernbar ausgebildet ist und in seiner Höhe eingestellt werden kann, ist es möglich den Flüssigkeitsstand in dem Ablaufkanal 1 zu variieren, um auf diese Weise die in den Schwimmer 1 eintretende Flüssigkeitsmenge anzupassen. Durch diese Maßnahme wird der Auftrieb des Schwimmers 3 verkleinert, so daß die schwenkbare Wandung 2 stets in einem gewissen Maß geöffnet bleibt, so daß ständig eine angepaßte Flüssigkeitsmenge in den Ablaufkanal 1 strömt. Sobald viel Flüssigkeit in den Ablaufkanal 1 gelangt, verringert sich der Auftrieb des Schwimmers 3 weiterhin, so daß die schwenkbare Wandung 2 bzw. das Wehr geschlossen wird.

Die erfindungsgemäße Anordnung gewährleistet, daß sich der Schwimmer um die Schwenkachse des Scharniers oder Gelenks 7 verschwenken kann, so daß ein Verklemmen des Schwimmers 3 verhindert wird. Je größer der Auftrieb des Schwimmers 3 ist, desto weiter wird die schwenkbare Wandung 2 verschwenkt, so daß Flüssigkeit in den Ablaufkanal 1 eintritt. Dies führt wegen der kommunizierenden Röhre 4 sofort zu einer Verminderung des Schwimmers 3, wodurch dieser stärker in die Flüssigkeit eintaucht und auf diese Weise die schwenkbare Wandung 2 schließt. Bei der daraufhin folgenden Entleerung des Ablaufkanals 1 läuft auch die in dem Schwimmer 3 befindliche Flüssigkeitsmenge ab, so daß dessen Auftrieb wiederum erhöht wird, so daß der eben beschriebene Regelvorgang von neuem ablaufen kann.

## Patentansprüche

1. Vorrichtung zur Entnahme von Flüssigkeiten und von Schwimmstoffen von einer Flüssigkeitsoberfläche (12) mit einem Ablaufkanal (1), einem den Ablaufkanal (1) von der Flüssigkeitsoberfläche (12) abtrennenden höhenveränderbaren Wehr und einem mit dem Wehr betriebsverbundenen Schwimmer (3) auf der Flüssigkeitsoberfläche (12), dadurch gekennzeichnet, daß der Innenraum des Schwimmers (3) mittels einer kommunizierenden Röhre (4) mit dem Ablaufkanal (1) verbunden ist, daß das Wehr in Form einer mittels eines Gelenks (7) schwenkbaren Wandung (2) des Ablaufkanals (1) ausgebildet ist und daß die schwenkbare Wandung (2) über einen Lagerarm (9) starr mit dem Schwimmer (3) verbunden ist.

2. Vorrichtung nach Anspruch 1, dadurch gekennzeichnet, daß die Röhre (4) an ihrem einen Ende (5) im Bodenbereich des Ablaufkanals (1) mündet.

3. Vorrichtung nach Anspruch 1, dadurch gekennzeichnet, daß die Röhre (4) in einem Abstand zum Bodenbereich des Ablaufkanals (1) mündet.

4. Vorrichtung nach einem der Ansprüche 1 bis 3, dadurch gekennzeichnet, daß die Röhre (4) in Form eines flexiblen Schlauches ausgebildet ist.

5. Vorrichtung nach Anspruch 1, dadurch gekennzeichnet, daß die schwenkbare Wandung (2) eine Überfallkante (8) aufweist.

6. Vorrichtung nach einem der Ansprüche 1 bis 5, dadurch gekennzeichnet, daß im Ablaufbereich des Ablaufkanals (1) ein Überlaufwehr (10) angeordnet ist.

7. Vorrichtung nach einem der Ansprüche 1 bis 6, dadurch gekennzeichnet, daß der Ablaufkanal (1) mittels einer Pumpe entleerbar ist.

8. Vorrichtung nach einem der Ansprüche 1 bis 7, dadurch gekennzeichnet, daß der Ablaufkanal (1) ein Gefälle aufweist.

9. Vorrichtung nach einem der Ansprüche 1 bis 8, dadurch gekennzeichnet, daß der Schwimmer (3) höhenverstellbar an dem Lagerarm (9) gelagert ist.

## Claims

1. A device for the removal of liquids and of floating matter from a liquid surface (12), having a discharge channel (1), a weir whose elevation can be altered and which separates the discharge channel (1) from the liquid surface (12), and a float (3) which is located on the liquid surface (12) and is operationally connected to the weir, characterised in that the interior space of the float (3) is connected to the discharge channel (1) by means of a communicating tube (4), in that the weir is in the form of a wall (2) of the discharge channel (1), which wall is pivotable by means of an articulation (7), and in that the pivotable wall (2) is rigidly connected to the float (3) via a bearing arm (9).

2. A device in accordance with Claim 1, characterised in that one end (5) of the tube (4) issues in the base region of the discharge channel (1).

3. A device in accordance with Claim 1, characterised in that the tube (4) issues at a distance from the base region of the discharge channel (1).

4. A device in accordance with any one of Claims 1 to 3, characterised in that the tube (4) is in the form of a flexible hose.

5. A device in accordance with Claim 1, characterised in that the pivotable wall (2) has an overfall edge (8).

6. A device in accordance with any one of Claims 1 to 5, characterised in that an overflow weir (10) is arranged in the discharge region of the discharge channel (1).

7. A device in accordance with any one of Claims 1 to 6, characterised in that the discharge channel (1) can be emptied by means of a pump.

8. A device in accordance with any one of Claims 1 to 7, characterised in that the discharge channel (1) is inclined.

9. A device in accordance with any one of Claims 1 to 8, characterised in that the float (3) is mounted on the bearing arm (9) so as to be vertically adjustable.

## Revendications

1. Dispositif pour enlever des liquides et des matières surnageantes d'une surface de liquide (12), comprenant un canal d'évacuation (1), un barrage réglable en hauteur qui sépare le canal d'évacuation (1) de la surface de liquide (12), et un flotteur (3) flottant sur la surface de liquide (12) et fonctionnellement relié au barrage, **caractérisé** en ce que l'intérieur du flotteur (3) est relié au canal d'évacuation (1) par l'intermédiaire d'un tuyau communicant (4), en ce que le barrage est réalisé sous la forme d'une paroi (2) du canal d'évacuation (1) qui peut pivoter grâce à une articulation (7), et en ce que la paroi pivotante (2) est rigidement reliée au flotteur (3) par l'intermédiaire d'un bras de liaison (9).

2. Dispositif selon la revendication 1, **caractérisé** en ce que le tuyau (4) débouche, à une de ses extrémités, dans la région de fond du canal d'évacuation (1).

3. Dispositif selon la revendication 1, **caractérisé** en ce que le tuyau (4) débouche à distance de la région de fond du canal d'évacuation (1).

4. Dispositif selon l'une quelconque des revendications 1 à 3, **caractérisé** en ce que le tuyau (4) est réalisé sous forme de tuyau souple.

5. Dispositif selon la revendication 1, **caractérisé** en ce que la paroi pivotante (2) présente une arête de déversement (8).

6. Dispositif selon l'une quelconque des revendications 1 à 5, **caractérisé** en ce qu'un barrage déversoir (10) est disposé dans la région de sortie du canal d'évacuation (1).

7. Dispositif selon l'une quelconque des revendications 1 à 6, **caractérisé** en ce que le canal d'évacuation (1) peut être vidé au moyen d'une pompe.

8. Dispositif selon l'une quelconque des revendications 1 à 7, **caractérisé** en ce que le canal d'évacuation (1) présente une pente.

9. Dispositif selon l'une quelconque des revendications 1 à 8, **caractérisé** en ce que le flotteur (3) est fixé au bras de liaison (9) avec possibilité de réglage en hauteur.
